# EUROPÄISCHE PATENTSCHRIFT

(11) **EP 3 895 230 B1**
(45) Veröffentlichungstag und Bekanntmachung des Hinweises auf die Patenterteilung: **12.02.2025**
(21) Anmeldenummer: 19827642.0
(22) Anmeldetag: 10.12.2019
(51) Int. Cl.: H01M 50/204, H01M 50/224, H01M 50/276

(54) **BATTERIEGEHÄUSE UND VERWENDUNG**
BATTERY HOUSING AND USE THEREOF
COMPARTIMENT À BATTERIES ET UTILISATION

(30) Priorität: 13.12.2018 DE 102018132171
(43) Veröffentlichungstag der Anmeldung: 20.10.2021
(73) Patentinhaber: ThyssenKrupp Steel Europe AG, 47166 Duisburg (DE)
(72) Erfinder: SCHULZ, Jennifer, 59427 Unna (DE); HILFRICH, Erik, 40470 Düsseldorf (DE)
(74) Vertreter: ThyssenKrupp Steel Europe AG
(86) Internationale Anmeldenummer: PCT/EP2019/084385
(87) Internationale Veröffentlichungsnummer: WO 2020/120454

(56) Entgegenhaltungen:
- EP-A1- 3 544 082
- WO-A1-2018/210420
- DE-A1- 102017 203 507
- US-A1- 2008 099 109
- US-A1- 2017 018 747

## Beschreibung

### Technisches Gebiet

Die vorliegende Erfindung betrifft ein Batteriegehäuse zur Aufnahme eines oder mehrerer Batteriemodule, insbesondere für ein elektrisch angetriebenes Fahrzeug oder ein Fahrzeug mit Hybridantrieb, umfassend einen Kasten mit einem Rahmen und einem Boden, welcher einen Innenraum zur Aufnahme des oder der Batteriemodule bereitstellt, mindestens einen zumindest abschnittsweise auf der dem Innenraum abgewandten Seite des Rahmens an den Rahmen des Kastens angebundenen Montageträger, welcher zur lösbaren Anbindung des Batteriegehäuses an ein Fahrzeug dient, einen Deckel zum Schließen des Kastens.

### Technischer Hintergrund

Die zunehmende bzw. anhaltende Elektrifizierung von Fahrzeugen, insbesondere von Automobilen, und der gleichzeitige Kundenwunsch nach hohen Reichweiten solcher Fahrzeuge, erfordert die Entwicklung von leistungsfähigen Batteriekonzepten. Insbesondere Batteriegehäuse, die die Batteriemodule aufnehmen bzw. in welchen die Batteriemodule aufgenommen sind, haben in der Regel eine wesentliche Erstreckung in Fahrzeuglängs- und - querrichtung und sind meistens mittig, insbesondere unterhalb der Fahrgastzelle unter dem Fahrzeug(bodenblech) montiert. Das Batteriegehäuse dient unter anderem zum Schutz der Batteriemodule vor Beschädigung wie auch zur Abfuhr der während der Fahrt des Fahrzeugs durch die Batteriemodule erzeugten Wärme. Damit ergeben sich komplexe Anforderungen hinsichtlich der Faktoren Bauraum, Crashperformance, Gewicht, Dichtigkeit etc.

Das Batteriegehäuse muss die Batteriemodule vor Wasser schützen und daher wasserdicht sein. Die Anforderungen fordern eine Dichtigkeit von typischerweise bis zu 1m Wassertiefe. Unterhalb des Fahrzeug(bodenblech)es ist das Batteriegehäuse Spritzwasser ausgesetzt, welches auch mit Streusalz versehen sein kann. Dazu muss das Batteriegehäuse gegen Durchrosten geschützt sein.

Um Batteriegehäuse wirtschaftlich und mit hoher Crashsicherheit herstellen zu können, sind diese vorzugsweise aus ultrahochfestem Stahl hergestellt. Ein gattungsgemäß gebautes Batteriegehäuse aus mehreren Stahlteilen sowie das Montieren bzw. Befestigen des Batteriegehäuses mit lösbaren Verbindungsmitteln, vorzugsweise mit Schrauben, an ein Fahrzeug ist beispielhaft in der DE 10 2016 110 330 A1 sowie der WO 2018 210 420 A1 offenbart.

Der eingesetzte Stahl sollte beschicht- und schweißbar sein. Der eingesetzte, vorzugsweise beschichtete Stahl bzw. die daraus gefertigten Bauteile werden u. a. zur Bildung eines Innenraums eines Batteriegehäuses zur Aufnahme von Batteriemodulen über Schweißnähte miteinander verbunden, wobei sichergestellt sein soll, dass die Schweißnähte den Innenraum versiegeln und damit dicht sind. Hier besteht ein Zielkonflikt, denn Korrosionsschutzbeschichtungen mit hoher Schutzwirkung können die Prozesssicherheit beim Schweißen bzw. der Schweißverbindung reduzieren. Des Weiteren sollte der eingesetzte Stahl auch einen gewissen Deformationswiderstand aufweisen, um im Crashfall den geforderten Anforderungen zu genügen.

### Zusammenfassung der Erfindung

Der Erfindung liegt die Aufgabe zu Grunde, ein Batteriegehäuse, insbesondere für ein elektrisch angetriebenes Fahrzeug oder ein Fahrzeug mit Hybridantrieb, bereitzustellen, welches wasserdicht und korrosionsbeständig ausgeführt ist und insbesondere einen hohen Deformationswiderstand aufweist.

Gelöst wird diese Aufgabe durch ein Batteriegehäuse mit den Merkmalen des Patentanspruchs 1.

Die Komponenten des Batteriegehäuses wie zum Beispiel der Rahmen, der Boden, der Montageträger oder der Deckel des Batteriegehäuses sind aus Metall gefertigt. Mindestens eines der Komponenten (Rahmen, Boden, Montageträger, Deckel) ist erfindungsgemäß aus einem Stahlblech gefertigt, welches eine Gefügestruktur umfassend Ferrit und Martensit aufweist und mit einem zinkbasierten Überzug ein- oder beidseitig versehen ist. Die Kombination aus Ferrit und Martensit verleiht der jeweiligen Komponente einen hohen Deformationswiderstand gepaart mit einer sehr guten Beschichtungseignung. Stahlbleche mit entsprechenden Gefügestrukturen bzw. Eigenschaften herzustellen, sind Stand der Technik und der Fachwelt bekannt. Erfindungsgemäß weist das Stahlblech eine Gefügestruktur mit mindestens 65 % Ferrit und Martensit auf, wobei mindestens 20 % Ferrit und mindestens 5 % Martensit vorhanden sind, wobei bis zu 35 % Bainit, Perlit, Zementit und/oder Restaustenit vorliegen kann.

Durch die Einstellung von Martensit ist deutlich, dass die eingesetzten Stahlbleche zur Fertigung der jeweiligen Komponente nur einer Kaltumformung bzw. einer temperierten Umformung bei der keine Gefügeumwandlung stattfindet, unterzogen werden, um die bereits im Stahlblech eingestellten vorteilhaften Eigenschaften auch in der späteren, gefertigten Komponente vorteilhaft nutzen zu können. Erfindungsgemäß werden die Stahlbleche vor der Fertigung und vor dem Zusammenbau der Komponenten zur Erstellung des Batteriegehäuses ein- oder beidseitig mit einem zinkbasierten Überzug versehen, welcher hervorragend gegen Korrosion und damit verbunden gegen schnelle Durchrostung schützt.

Die Gefügestruktur kann insbesondere mindestens 70 % Ferrit und Martensit, vorzugsweise mindestens 80 % Ferrit und Martensit, bevorzugt mindestens 85 % Ferrit und Martensit aufweisen, wobei insbesondere bis zu 30 %, vorzugsweise bis zu 20 %, bevorzugt bis zu 15 % Bainit, Perlit, Zementit und/oder Restaustenit vorliegen kann.

Vorteilhafte Ausgestaltungen und Varianten der Erfindung ergeben sich aus den abhängigen Ansprüchen und der nachfolgenden Beschreibung.

Gemäß einer Ausgestaltung umfasst das Batteriegehäuse ferner einen Unterfahrschutz, welcher unterhalb des Bodens des Kastens, insbesondere mit Abstand zum Boden, angeordnet ist, wobei der Unterfahrschutz aus einem Stahlblech gefertigt ist, welches eine Gefügestruktur umfassend Ferrit und Martensit aufweist und mit einem zinkbasierten Überzug ein- oder beidseitig versehen ist. Der Unterfahrschutz kann insbesondere zusätzlichen Schutz der Batteriemodule von unten eindringenden Fremdkörpern, falls der Boden des Kastens nicht ausreichend dimensioniert ist bzw. werden kann, gewährleisten. Der Unterfahrschutz ist insbesondere mit Abstand zum Boden des Kastens angeordnet, so dass zum einen eine gute Ausnutzung des zur Verfügung stehenden Bauraums zur Unterbringung von beispielsweise Temperiermittel für Kühl- und/oder Heizzwecke der Batteriemodule und/oder andere Mittel zum Betreiben/Versorgen der Batteriemodule vorgesehen sein kann und zum anderen durch den Abstand eindringende Fremdkörper von unten abgebremst werden können, bevor diese die sensiblen Batteriemodule erreichen und dadurch beschädigen können, was zu einem kritischen Kurzschluss und im schlimmsten Fall zu einem Brand führen kann. Der Unterfahrschutz sollte, um bei Beschädigung austauschbar zu sein aber auch um eine gewisse Wartungsmöglichkeit von unten sicherzustellen, gemäß einer bevorzugten Ausgestaltung lösbar am Batteriegehäuse angebunden sein. Unter lösbar sind beispielsweise mechanische Fügeverfahren zu verstehen, wie zum Beispiel mittels Clipse und/oder Schrauben und/oder mittels Kleben. Wenn kein (zusätzlicher) Unterfahrschutz vorhanden ist, übernimmt der Boden des Kastens die Funktion des Unterfahrschutzes. Bei einer alternativen Ausgestaltung kann der Boden als tiefgezogene Wanne ausgeführt sein.

Gemäß einer bevorzugten Ausgestaltung weist das Stahlblech eine Gefügestruktur mit mindestens 60 % Ferrit und mindestens 5 % Martensit auf, wobei bis zu 35 %, insbesondere bis zu 30 %, vorzugsweise bis zu 25 % Bainit, Perlit, Zementit und/oder Restaustenit vorliegen kann. Besonders bevorzugt weist das Stahlblech eine Gefügestruktur mit 70 bis 90 % Ferrit und 10 bis 30 % Martensit auf, wobei bis zu 20 % Restaustenit vorliegen kann. Diese Kombination der im Stahlblech eingestellten Gefügestruktur ermöglicht einen hohen Deformationswiderstand und gleichzeitig eine hohe Beschichtungseignung. Durch den Martensitanteil im Gefüge bis zu maximal 30 % ist dennoch eine Kaltumformung des Stahlblechs mit konventioneller Anlagentechnik umsetzbar.

Gemäß einer alternativen Ausgestaltung weist das Stahlblech eine Gefügestruktur mit mindestens 65 % Ferrit und Martensit auf, wobei 20 bis 95 % Ferrit und 5 bis 80 % Martensit, insbesondere 40 bis 80 % Ferrit und 20 bis 60 % Martensit, vorhanden sind, wobei bis zu 35 %, insbesondere bis zu 30 %, vorzugsweise bis zu 25 % Bainit, Perlit, Zementit und/oder Restaustenit vorliegen kann.

Die genannten Gefügeanteile in % beziehen sich hierbei, mit Ausnahme der Angaben zu den Gehalten an (Rest-)Austenit, die üblicherweise durch Röntgendiffraktometrie bestimmt werden und daher in Vol.-% angegeben sind, auf die im Schliff betrachtete Fläche.

Gemäß einer weiteren bevorzugten Ausgestaltung ist das Stahlblech mit einem ein- oder beidseitigen zinkbasierten Überzug versehen, welcher neben Zink und unvermeidbaren Verunreinigungen auch mindestens eines der Elemente aus der Gruppe Aluminium und Magnesium. Besonders bevorzugt besteht der zinkbasierte Überzug aus Aluminium mit 0,5 bis 4 Gew.-% und/oder Magnesium mit 0,5 bis 4 Gew.-%, Rest Zink und unvermeidbare Verunreinigungen, welcher einen gegenüber einem aus reinen Zink bestehenden Überzug verbesserten Korrosionsschutz aufweist. Eine weitere Verbesserung des Korrosionsschutzes geht einher, wenn sowohl Aluminium als auch Magnesium in dem Überzug enthalten sind, so dass gemäß einer weiteren bevorzugten Ausgestaltung der zinkbasierte Überzug aus Aluminium mit 1 bis 2,5 Gew.-% und Magnesium mit 1 bis 2,5 Gew.-%, Rest Zink und unvermeidbare Verunreinigungen besteht. Der verbesserte Korrosionsschutz hat den wesentlichen Vorteil, dass die Auflage, bei immer noch ausreichendem Korrosionsschutz, dünner ausgeführt werden kann als bei herkömmlichen (Feuer-)Zinküberzügen, wodurch die Prozesssicherheit beim bevorzugten Schweißen verbessert werden kann, was entscheidend sein kann, um die Dichtigkeit der Füge-/Schweißverbindungen in der Großserienfertigung zu gewährleisten.

Um einen ausreichenden Korrosionsschutz zu ermöglichen, weist gemäß einer Ausgestaltung der zinkbasierte Überzug des Stahlblechs für die Fertigung der mindestens einen Komponente (Rahmen, Boden, Montageträger, Deckel) eine Auflage von mindestens 30 g/m² pro Seite ein- oder beidseitig auf dem Stahlblech auf, insbesondere mit einer Auflage von 40 g/m² bis 90 g/m² pro Seite ein- oder beidseitig. Für den Fall, dass ein Unterfahrschutz verwendet wird, weist gemäß einer Ausgestaltung der zinkbasierte Überzug des Stahlblechs für die Fertigung des Unterfahrschutzes eine Auflage von mindestens 30 g/m², insbesondere von mindestens 60 g/m², vorzugsweise von mindestens 90 g/m² pro Seite ein- oder beidseitig auf dem Stahlblech auf, bevorzugt mit einer Auflage von 120 g/m² bis 300 g/m² pro Seite ein- oder beidseitig.

Gemäß einer Ausgestaltung sind zumindest der Rahmen und der Boden des Kastens mit einem zusätzlichen kathodischen Tauchlacküberzug mit einer Auflage von mindestens 10 µm pro Seite ein- oder beidseitig versehen. Der kathodische Tauchlacküberzug erzeugt eine Barriere und verlangsamt den Abbau des zinkbasierten Überzugs und kann besonders effektiv vor salzhaltigem Spritzwasser schützen Für den Fall, dass ein Unterfahrschutz verwendet wird, ist gemäß einer Ausgestaltung der Unterfahrschutz mit einem zusätzlichen kathodischen Tauchlacküberzug mit einer Auflage von mindestens 15 µm pro Seite ein- oder beidseitig versehen, insbesondere mindestens 20 µm pro Seite ein- oder beidseitig, vorzugsweise mindestens 30 µm pro Seite ein- oder beidseitig. Der Unterfahrschutz wird nach der Fertigung als Einzelteil zusätzlich mit einem kathodischen Tauchlacküberzug beschichtet, so dass eine Barrierewirkung gegen den Abbau des zinkbasierten Überzugs bereitgestellt wird und dadurch der Schutz vor Grundmetallkorrosion verlängert wird, insbesondere wenn der Unterfahrschutz einem (salzhaltigen) Spritzwasser ausgesetzt ist. Dieser Überzug kann auch noch mit weiteren, nachträglich aufgebrachten Korrosionsschutzbeschichtungen/-überzügen ergänzt werden.

Der Unterfahrschutz ist insbesondere im Vergleich zu den anderen Komponenten bevorzugt mit einer höheren Auflage des zinkbasierten Überzugs versehen, da die Anforderungen an den Korrosionsschutz für dieses Bauteil besonders hoch sind und, sofern der Unterfahrschutz mittels Clipsen und/oder Schrauben und/oder Kleben gefügt bzw. angebunden ist, die Auflage keinen Einfluss auf die Dichtigkeit der Fügeverbindung hat. Falls der Unterfahrschutz mittels Schweißen gefügt bzw. angebunden ist, können insbesondere die für den Boden beschriebenen Auflagen des zinkbasierten Überzugs und des kathodischen Tauchlacküberzugs verwenden werden.

Gemäß einer zweiten Lehre betrifft die Erfindung eine Verwendung eines Batteriegehäuses gemäß einer der vorgenannten Ausgestaltungen zur lösbaren Anbindung an einem Personenfahrzeug, Nutzfahrzeug, Sonderfahrzeug, insbesondere Bus, Omnibus oder einem gleisgebundenen Fahrzeug, insbesondere Straßenbahn oder personenbefördernder Waggon bzw. Triebwagen.

### Kurze Beschreibung der Zeichnungen

Im Folgenden wird die Erfindung anhand von Zeichnungen näher erläutert. Gleiche Teile sind mit gleichen Bezugszeichen versehen. Im Einzelnen zeigen:

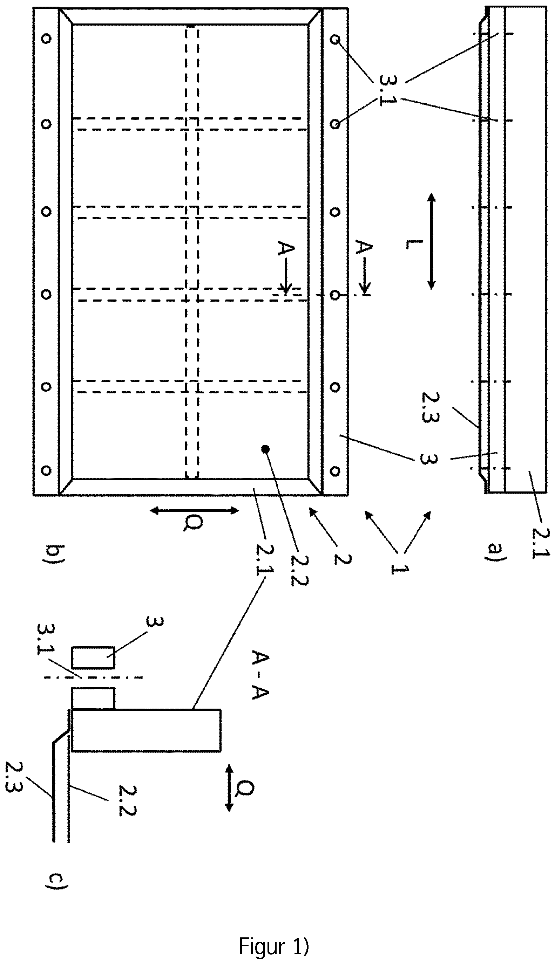

Fig. 1 a) eine schematische Seitenansicht auf ein Batteriegehäuse,
Fig. 1 b) eine schematische Draufsicht des in Fig. 1a) gezeigten Batteriegehäuses und
Fig. 1 c) eine schematische Teilschnittansicht entlang des Schnitts A-A in Fig. 1b).

### Beschreibung der bevorzugten Ausführungsformen

Das Batteriegehäuse (1) zur Aufnahme eines oder mehrerer Batteriemodule (nicht dargestellt) kann unterschiedlich ausgeführt sein. Das Batteriegehäuse (1) umfasst erfindungsgemäß einen Kasten (2), der einen Boden (2.2) mit Rahmen (2.1), insbesondere einen umlaufenden Rahmen (2.1) als Wandung, aufweist, welcher einen Innenraum zur Aufnahme des oder der nicht dargestellten Batteriemodule definiert, und einen Deckel (nicht dargestellt) zum Schließen des Kastens (2). Des Weiteren ist mindestens ein zumindest abschnittsweise auf der dem Innenraum abgewandten Seite des Rahmens (2.1) an den Rahmen (2.1) des Kastens angeordneter Montageträger (3) angebunden, welcher zur lösbaren Anbindung des Batteriegehäuses (1) über nicht dargestellte Mittel, beispielsweise Schrauben, die durch entsprechende Öffnungen (3.1) durchführbar sind, an ein nicht dargestelltes Fahrzeug dient. Der Montageträger (3) ist zumindest abschnittsweise außenseitig an dem Rahmen (2.1) des Kastens angeordnet, insbesondere stoffschlüssig verbunden, vorzugsweise angeschweißt. Der Montageträger (3) kann auch, wie in den Figuren 1a) und 1b) gezeigt, zumindest durchgehend auf beiden Seiten des Batteriegehäuses (1) entlang des Rahmens (2.1) in Fahrzeuglängsrichtung (L) angeordnet sein. Alternativ oder zusätzlich und hier nicht dargestellt kann der Montageträger (3) auch in Fahrzeugquerrichtung (Q) zumindest abschnittsweise an dem Rahmen (2.1) angebunden sein. Der Montageträger (3) kann unterschiedlich bzw. bedarfsgerecht dimensioniert sein, beispielsweise als offenes oder geschlossenes Profil ausgebildet sein.

Bei dem Kasten kann es sich um einen gebauten Kasten (2) handeln, heißt, dass dieser aus einzelnen Bauteilen, wie zum Beispiel aus mindestens einem offenen oder geschlossenen Profil, welches derart umgeformt sein kann, dass es einen umlaufenden Rahmen (2.1) ausbildet, oder vorzugsweise aus mindestens vier Profilen, welche einen offenen oder geschlossenen Querschnitt aufweisen und derart miteinander verbunden sind, dass sie einen umlaufenden Rahmen (2.1) ausbilden, und einer Platte, welche mit dem Rahmen (2.1) verbunden ist und den Boden (2.2) des Kastens (2) bildet, zusammengesetzt ist, insbesondere stoffschlüssig verbunden. Bei einer alternativen, nicht dargestellten Ausgestaltung kann der Boden des Kastens als tiefgezogene Wanne ausgeführt sein.

Das Batteriegehäuse (1) kann ferner einen Unterfahrschutz (2.3), welcher unterhalb des Bodens (2.2) des Kastens (2), insbesondere mit Abstand zum Boden (2.2), s. Figuren 1a) und 1c), angeordnet ist, umfassen. In Figur 1b) sind strichliniert mindestens ein Verstärkungselement, in dieser Ausführungsform ist beispielsweise genau ein Verstärkungselement dargestellt, in Fahrzeuglängsrichtung (L) und/oder mindestens ein Verstärkungselement, in dieser Ausführungsform sind beispielsweise vier Verstärkungselemente dargestellt, in Fahrzeugquerrichtung (Q) im Innenraum des Kastens (2) verlaufend angeordnet. Diese können bei Bedarf vorhanden sein und somit Fächer zur Aufnahme von Batteriemodulen bilden. In dieser Ausführung können beispielhaft bis zu acht Batteriemodule aufgenommen werden.

Erfindungsgemäß ist mindestens eines der Komponenten und/oder Bauteile, beispielsweise der Rahmen (2.1), der Boden (2.2), der Unterfahrschutz (2.3), der Montageträger (3), das Verstärkungselement bzw. die Verstärkungselemente (vgl. Fig. 1b)) oder der Deckel (nicht dargestellt) aus jeweils einem Stahlblech gefertigt, welches eine Gefügestruktur umfassend Ferrit und Martensit aufweist, vorzugsweise eine Gefügestruktur mit mindestens 60 % Ferrit und mindestens 5 % Martensit, wobei bis zu 35 %, insbesondere bis zu 30 %, vorzugsweise bis zu 25 % Bainit, Perlit, Zementit und/oder Restaustenit vorliegen kann, besonders bevorzugt eine Gefügestruktur mit 70 bis 90 % Ferrit und 10 bis 30 % Martensit, wobei bis zu 20 % Restaustenit vorliegen kann.

Das Stahlblech für die Fertigung der mindestens einen Komponente (Rahmen, Boden, Unterfahrschutz, Montageträger, Verstärkungselement, Deckel) ist erfindungsgemäß mit einem zinkbasierten Überzug ein- oder beidseitig versehen, wobei insbesondere neben Zink und unvermeidbaren Verunreinigungen auch mindestens eines der Elemente aus der Gruppe Aluminium und Magnesium im Überzug vorhanden sein kann, besonders bevorzugt der zinkbasierte Überzug aus Aluminium mit 0,5 bis 4 Gew.-% und/oder Magnesium mit 0,5 bis 4 Gew.-%, Rest Zink und unvermeidbare Verunreinigungen, weiter bevorzugt der zinkbasierte Überzug aus Aluminium mit 1 bis 2,5 Gew.-% und Magnesium mit 1 bis 2,5 Gew.-%, Rest Zink und unvermeidbare Verunreinigungen besteht. Die Auflage auf dem Stahlblech respektive der daraus gefertigten Komponente beträgt mindestens 30 g/m² pro Seite ein- oder beidseitig auf dem Stahlblech. Für den Unterfahrschutz (2.3) kann eine Auflage von mindestens 90 g/m² pro Seite ein- oder beidseitig auf dem Stahlblech vorgesehen sein. Der zinkbasierte Überzug wird vor der Fertigung zu einer Komponente auf das Stahlblech, beispielsweise konventionell kontinuierlich in einem Bandbeschichtungsprozess, vorzugsweise in einem kontinuierlichen Schmelztauchbeschichtungsprozess aufgebracht.

Vorzugsweise sind der Rahmen (2.1) bzw. die Bauteile zur Erstellung des Rahmens (2.1), der Boden (2.2), der Montageträger (3) und der Unterfahrschutz (2.3) jeweils aus einem Stahlblech gefertigt, welches eine Gefügestruktur umfassend Ferrit und Martensit aufweist und mit einem zinkbasierten Überzug ein- oder beidseitig versehen ist.

Bei dem vorzugsweise gebauten Kasten (2) werden die einzelnen Bauteile, wie zum Beispiel die Bauteile zur Erstellung des Rahmens (2.1), der Boden (2.2) und optional der Montageträger (3) durch Stoffschluss miteinander verbunden, wobei ein Schweißprozess zur Anwendung kommt, insbesondere ein Laserschweißen oder wahlweise ein Laser-Hybridschweißen (mit Zusatzwerkstoff). Die Kombination aus Gefügestruktur, Überzug und Fügeverfahren gewährleistet eine hohe Qualität der mittels Schweißnähten verbundenen Komponenten (2.1, 2.2) und damit die Dichtigkeit des Batteriegehäuses (1). So kann insbesondere nach der Fertigstellung des Kastens (2) mit oder ohne Montageträger (3), zumindest der Kasten (2) einer kathodischen Tauchlackierung zugeführt werden, so dass zumindest der Rahmen (2.1) und der Boden (2.2) des Kastens (2) mit einem zusätzlichen kathodischen Tauchlacküberzug mit einer Auflage von mindestens 10 µm pro Seite ein- oder beidseitig versehen sind.

Der Unterfahrschutz (2.3) ist vorzugsweise lösbar an dem Batteriegehäuse (1) respektive an dem Kasten (2) angebunden und ist vorzugsweise mit einem zusätzlichen kathodischen Tauchlacküberzug mit einer Auflage von mindestens 15 µm pro Seite ein- oder beidseitig versehen. Soweit zur Anbindung des Unterfahrschutzes (2.3) kein Schweißen zum Einsatz kommt, kann der zinkbasierte Überzug und/oder der kathodische Tauchlacküberzug mit hoher Auflage insbesondere mit einer höheren Auflage im Vergleich zu den anderen Komponenten (2.1, 2.2, 3) aufgebracht werden, was zu einem besonders guten Korrosionsschutz führen kann. Um die Anbindung zwischen Unterfahrschutz (2.3) und Kasten (2) respektive Batteriegehäuse (1) vorzugsweise dicht auszuführen, wird der Anbindungsbereich bzw. Kontaktbereich zusätzlich mit Klebstoff und/oder Abdichtmitteln versehen, so dass auch hier eine Wasserdichtigkeit und ein Korrosionsschutz gegen vorzeitige Durchrostung gewährleistet werden kann. Falls der Unterfahrschutz (2.3) mittels Schweißen gefügt bzw. angebunden ist, können insbesondere die für den Boden beschriebenen Auflagen des zinkbasierten Überzugs und des kathodischen Tauchlacküberzugs verwenden werden.

Der nicht dargestellte Deckel kann aus einem Stahlblech mit den vorgenannten Eigenschaften gefertigt sein. Alternativ kann der Deckel auch aus einem anderen Stahlwerkstoff, aus einem Leichtmetall, aus einem (faserverstärkten) Kunststoff oder auch aus einer Mischung daraus als Hybrid gefertigt sein. Zu Wartungszwecken, insbesondere zur Gewährleistung der Zugänglichkeit zu dem Innenraum des Kastens (2) wird der Deckel vorzugsweise lösbar mit dem Kasten (2) verbunden.

Die Erfindung ist nicht auf die gezeigte Ausführungsform beschränkt, sondern die einzelnen Merkmale sind beliebig miteinander kombinierbar, sofern dies technisch möglich ist, sowie innerhalb des Schutzumfangs der Ansprüche.

## Patentansprüche

1. Batteriegehäuse (1) zur Aufnahme eines oder mehrerer Batteriemodule, insbesondere für ein elektrisch angetriebenes Fahrzeug oder ein Fahrzeug mit Hybridantrieb, umfassend
- einen Kasten (2) mit einem Rahmen (2.1) und einem Boden (2.2), welcher einen Innenraum zur Aufnahme des oder der Batteriemodule bereitstellt,
- mindestens einen zumindest abschnittsweise auf der dem Innenraum abgewandten Seite des Rahmens (2.1) an den Rahmen (2.1) des Kastens (2) angebundenen Montageträger (3), welcher zur lösbaren Anbindung des Batteriegehäuses (1) an ein Fahrzeug dient,
- einen Deckel zum Schließen des Kastens (2),
**dadurch gekennzeichnet, dass**
der Rahmen (2.1), der Boden (2.2), der Montageträger (3) oder der Deckel des Batteriegehäuses (1) aus einem Stahlblech gefertigt ist, welches eine Gefügestruktur umfassend Ferrit und Martensit aufweist, wobei das Stahlblech eine Gefügestruktur mit mindestens 65 % Ferrit und Martensit aufweist, wobei mindestens 20 % Ferrit und mindestens 5 % Martensit vorhanden sind, wobei bis zu 35 % Bainit, Perlit, Zementit und/oder Restaustenit vorliegen kann, und mit einem zinkbasierten Überzug ein- oder beidseitig versehen ist.

2. Batteriegehäuse nach Anspruch 1, wobei das Batteriegehäuse (1) ferner einen Unterfahrschutz (2.3) umfasst, welcher unterhalb des Bodens (2.2) des Kastens (2) angeordnet ist, wobei der Unterfahrschutz (2.3) aus einem Stahlblech gefertigt ist, welches eine Gefügestruktur umfassend Ferrit und Martensit aufweist und mit einem zinkbasierten Überzug ein- oder beidseitig versehen ist.

3. Batteriegehäuse nach Anspruch 2, wobei der Unterfahrschutz (2.3) lösbar am Batteriegehäuse (2) angebunden ist.

4. Batteriegehäuse nach einem der vorgenannten Ansprüche, wobei das Stahlblech eine Gefügestruktur mit mindestens 60 % Ferrit und mindestens 5 % Martensit aufweist, wobei bis zu 35 % Bainit, Perlit, Zementit und/oder Restaustenit vorliegen kann.

5. Batteriegehäuse nach einem der vorgenannten Ansprüche, wobei das Stahlblech eine Gefügestruktur mit 70 bis 90 % Ferrit und 10 bis 30 % Martensit aufweist, wobei bis zu 20 % Restaustenit vorliegen kann.

6. Batteriegehäuse nach einem der vorgenannten Ansprüche, wobei der zinkbasierte Überzug neben Zink und unvermeidbaren Verunreinigungen auch mindestens eines der Elemente aus der Gruppe Aluminium und Magnesium umfasst.

7. Batteriegehäuse nach einem der vorgenannten Ansprüche, wobei der zinkbasierte Überzug aus Aluminium mit 0,5 bis 4 Gew.-% und/oder Magnesium mit 0,5 bis 4 Gew.-%, Rest Zink und unvermeidbare Verunreinigungen besteht.

8. Batteriegehäuse nach einem der vorhergehenden Ansprüche, wobei der zinkbasierte Überzug eine Auflage von mindestens 30 g/m² pro Seite ein- oder beidseitig auf dem Stahlblech aufweist.

9. Batteriegehäuse nach Anspruch 2 oder 3, wobei der zinkbasierte Überzug eine Auflage von mindestens 90 g/m² pro Seite ein- oder beidseitig auf dem Stahlblech aufweist.

10. Batteriegehäuse nach einem der vorgenannten Ansprüche, wobei zumindest der Rahmen (2.1) und der Boden (2.2) des Kastens (2) mit einem zusätzlichen kathodischen Tauchlacküberzug mit einer Auflage von mindestens 10 µm pro Seite ein- oder beidseitig versehen sind.

11. Batteriegehäuse nach einem der Ansprüche 2 bis 9, wobei der Unterfahrschutz (2.3) mit einem zusätzlichen kathodischen Tauchlacküberzug mit einer Auflage von mindestens 15 µm pro Seite ein- oder beidseitig versehen ist.

12. Verwendung eines Batteriegehäuses (1) nach einem der vorgenannten Ansprüche zur lösbaren Anbindung an einem Personenfahrzeug, Nutzfahrzeug, Sonderfahrzeug oder einem gleisgebundenen Fahrzeug.

## Claims

1. Battery housing (1) for accommodating one or more battery modules, in particular for an electrically powered vehicle or a vehicle with hybrid drive, comprising
- a box (2) with a frame (2.1) and a base (2.2), which provides an interior space for accommodating the battery module or modules,
- at least one mounting support (3) which is connected to the frame (2.1) of the box (2) at least in sections on the side of the frame (2.1) facing away from the interior and which serves to detachably connect the battery housing (1) to a vehicle,
- a lid to close the box (2),
**characterized in that**
the frame (2.1), the base (2.2), the mounting support (3) or the cover of the battery housing (1) is made from a sheet steel which has a microstructure comprising ferrite and martensite, the sheet steel having a microstructure with at least 65% ferrite and martensite, at least 20% ferrite and at least 5% martensite being present, up to 35% bainite, pearlite, cementite and/or retained austenite being present, and being provided with a zinc-based coating on one or both sides.

2. Battery housing according to claim 1, wherein the battery housing (1) further comprises an underride guard (2.5) which is arranged below the bottom (2.2) of the box (2), wherein the underride guard (2.5) is made of a steel sheet which has a microstructure comprising ferrite and martensite and is provided with a zinc-based coating on one or both sides.

3. Battery housing according to claim 2, wherein the underride guard (2.5) is detachably connected to the battery housing (2).

4. Battery housing according to one of the preceding claims, wherein the steel sheet has a microstructure with at least 60 % ferrite and at least 5 % martensite, wherein up to 35 % bainite, pearlite, cementite and/or retained austenite may be present.

5. Battery housing according to one of the preceding claims, wherein the steel sheet has a microstructure with 70 to 90 % ferrite and 10 to 30 % martensite, wherein up to 20 % retained austenite may be present.

6. The battery housing according to any one of the preceding claims, wherein the zinc-based coating comprises, in addition to zinc and unavoidable impurities, at least one of aluminum and magnesium.

7. Battery housing according to one of the preceding claims, wherein the zinc-based coating consists of aluminum with 0.5 to 4 wt.% and/or magnesium with 0.5 to 4 wt.%, balance zinc and unavoidable impurities.

8. The battery housing according to any one of the preceding claims, wherein the zinc-based coating has a coating of at least 30 g/m² per side on one or both sides of the steel sheet.

9. Battery housing according to claim 2 or 3, wherein the zinc-based coating has a coating of at least 90 g/m² per side on one or both sides of the steel sheet.

10. Battery housing according to one of the preceding claims, wherein at least the frame (2.1) and the bottom (2.2) of the box (2) are provided with an additional cathodic dip coating with a coating of at least 10 µm per side on one or both sides.

11. Battery housing according to any one of claims 2 to 9, wherein the underride guard (2.5) is provided with an additional cathodic dip coating with a coating of at least 15 µm per side on one or both sides.

12. Use of a battery housing (1) according to one of the preceding claims for detachable connection to a passenger vehicle, commercial vehicle, special vehicle or track-bound vehicle.

## Revendications

1. Boîtier de batterie (1) destiné à recevoir un ou plusieurs modules de batterie, en particulier pour un véhicule à propulsion électrique ou un véhicule à propulsion hybride, comprenant
- un caisson (2) avec un cadre (2.1) et un fond (2.2), qui fournit un espace intérieur pour recevoir le ou les modules de batterie,
- au moins un support de montage (3) relié au moins par sections au cadre (2.1) de la caisse (2) sur le côté du cadre (2.1) opposé à l'espace intérieur, lequel support sert à relier de manière amovible le boîtier de batterie (1) à un véhicule,
- un couvercle pour fermer la boîte (2),
**caractérisé en ce que**
le cadre (2.1), le fond (2.2), le support de montage (3) ou le couvercle du boîtier de batterie (1) est fabriqué à partir d'une tôle d'acier qui présente une structure comprenant de la ferrite et de la martensite, la tôle d'acier présentant une structure avec au moins 65 % de ferrite et de martensite, au moins 20 % de ferrite et au moins 5 % de martensite étant présents, jusqu'à 35 % de bainite, de perlite, de cémentite et/ou d'austénite résiduelle pouvant être présents, et est pourvue d'un revêtement à base de zinc sur une face ou sur les deux.

2. Boîtier de batterie selon la revendication 1, dans lequel le boîtier de batterie (1) comprend en outre une protection anti-encastrement (2.3) qui est disposée sous le fond (2.2) du caisson (2), la protection anti-encastrement (2.5) étant fabriquée à partir d'une tôle d'acier qui présente une structure comprenant de la ferrite et de la martensite et qui est pourvue d'un revêtement à base de zinc sur un côté ou sur les deux côtés.

3. Boîtier de batterie selon la revendication 2, dans lequel la protection anti-encastrement (2.5) est reliée de manière amovible au boîtier de batterie (2).

4. Boîtier de batterie selon l'une des revendications précédentes, dans lequel la tôle d'acier présente une structure comprenant au moins 60 % de ferrite et au moins 5 % de martensite, jusqu'à 35 % de bainite, de perlite, de cémentite et/ou d'austénite résiduelle pouvant être présents.

5. Boîtier de batterie selon l'une quelconque des revendications précédentes, dans lequel la tôle d'acier présente une structure comprenant 70 à 90 % de ferrite et 10 à 30 % de martensite, jusqu'à 20 % d'austénite résiduelle pouvant être présente.

6. Boîtier de batterie selon l'une quelconque des revendications précédentes, dans lequel le revêtement à base de zinc comprend, outre du zinc et des impuretés inévitables, au moins l'un des éléments choisis parmi l'aluminium et le magnésium.

7. Boîtier de batterie selon l'une quelconque des revendications précédentes, dans lequel le revêtement à base de zinc est constitué d'aluminium avec 0,5 à 4 % en poids et/ou de magnésium avec 0,5 à 4 % en poids, le reste étant du zinc et des impuretés inévitables.

8. Boîtier de batterie selon l'une quelconque des revendications précédentes, dans lequel le revêtement à base de zinc comprend un dépôt d'au moins 30 g/m² par face, sur une ou deux faces de la tôle d'acier.

9. Boîtier de batterie selon la revendication 2 ou 3, dans lequel le revêtement à base de zinc présente un dépôt d'au moins 90 g/m² par face sur une ou deux faces de la tôle d'acier.

10. Boîtier de batterie selon l'une des revendications précédentes, dans lequel au moins le cadre (2.1) et le fond (2.2) du boîtier (2) sont pourvus d'un revêtement supplémentaire de peinture par immersion cathodique avec un dépôt d'au moins 10 µm par côté, sur une ou sur les deux faces.

11. Boîtier de batterie selon l'une des revendications 2 à 9, dans lequel la protection anti-encastrement (2.5) est pourvue d'un revêtement supplémentaire de peinture cathodique par immersion avec un dépôt d'au moins 15 µm par côté, sur une ou deux faces.

12. Utilisation d'un boîtier de batterie (1) selon l'une des revendications précédentes pour le raccordement amovible à un véhicule de tourisme, un véhicule utilitaire, un véhicule spécial ou un véhicule sur rails.
